(19) Europäisches Patentamt

European Patent Office

Office européen des brevets

(11) **EP 1 668 994 A1**

(12) **EUROPEAN PATENT APPLICATION**
published in accordance with Art. 158(3) EPC

(43) Date of publication:
**14.06.2006 Bulletin 2006/24**

(51) Int Cl.:
*A23L 1/31* (1968.09)     *A23L 1/325* (1968.09)

(21) Application number: **04773603.8**

(22) Date of filing: **28.09.2004**

(86) International application number:
**PCT/JP2004/014579**

(87) International publication number:
**WO 2005/032279 (14.04.2005 Gazette 2005/15)**

(84) Designated Contracting States:
**DE FR GB IT**

(30) Priority: **03.10.2003 JP 2003346295**

(71) Applicant: **Ajinomoto Co., Inc.**
**Tokyo 104-8315 (JP)**

(72) Inventors:
• **FUKUDA, Akihiro,**
**Ajinomoto Communications Inc.**
**Chuo-ku, Tokyo 1040032 (JP)**

• **NUMAZAWA, Toshiya,**
**Ajinomoto Co., Inc.**
**Kawasaki-shi, Kanagawa 2108681 (JP)**
• **IDE, Hiroyuki,**
**Ajinomoto Co., Inc.**
**Kawasaki-shi, Kanagawa 2108681 (JP)**

(74) Representative: **Strehl Schübel-Hopf & Partner**
**Maximilianstrasse 54**
**80538 München (DE)**

(54) **MEAT IMPROVING AGENT AND PROCESS FOR PRODUCING PROCESSED MEAT FOOD BY USING THE MEAT IMPROVING AGENT**

(57)     To develop a meat improving agent which is used in heat-cooked foods of animal and fishery products at the stage of pretreatment before heating, whereby even after storage at room temperature or under chilling or freezing for 24 hours, a soft feel, a juicy feel and a fibrous feel are maintained while keeping a yield equal to a yield given by ordinary products, and a taste is not deteriorated.

A meat improving agent comprising, per part by weight of a roast salt, from 0.001 to 0.1 part by weight of glutathione, from 2.5 to 5.5 parts by weight of a sugar alcohol and from 1.0 to 2.5 parts by weight of a starch derivative obtained by esterifying or/and etherifying starch.

EP 1 668 994 A1

**Description**

**Technical Field of the Invention**

The present invention relates to a meat improving agent of animal and fishery products, and a method for making a processed meat food with improved quality using the meat improving agent. More specifically, it relates to a meat improving agent of animal and fishery products which has an effect of suppressing the decrease in yield, a hard feel in the mouth and the decrease in taste that occur during a heating step such as steaming, roasting or frying or during storage and which is used to maintain a juicy feel, a soft feel, a fibrous feel and a good taste even in storage at room temperature or under chilling or freezing for at least 24 hours with less quality deterioration in comparison to ordinary techniques, and a method for making a processed meat food using the meat improving agent.

**Background Art**

With respect to processed foods of animal meats of cow, pig, chicken and the like and fish meats of freshwater and saltwater fishes and shellfishes, a good yield, a soft juicy feel in the mouth and a good taste are favorable. However, processed meat foods of which the yield, the feel in the mouth and the taste are not satisfactory enough have been actually distributed. These processed foods have been sold in convenience stores or super markets. Processed meat foods of animal and fishery products sold in convenience stores or super markets have been mainly pretreated and mass-cooked in central kitchens or the like. In the heat-cooking step (steaming, roasting, frying or the like), a meat juice by which animal and fish meats taste good is removed, a yield is decreased, and hard unpalatable meat devoid of a juicy soft feel tends to be obtained. Since products are transported from central kitchens or the like to selling positions, it takes much time before they are eaten in good taste, the feel in the mouth and the taste are decreased, and the yield is bad. Thus, the improvements thereof have been in demand.

Many studies have been made regarding the measures for coping with quality deterioration that even after the lapse of much time the processed meat foods of animal and fishery products provide a good yield, and keep a juicy soft feel, a good feel in the mouth and a good taste. For example, (1) a method for improvement using alkaline preparations (phosphates and carbonates) and the like either singly or in combination (JP-A-4-36167, JP-A-11-200823 and Japanese Patent No. 2568946), (2) a method for improvement using glutathione preparations and the like either singly or in combination (Japanese Patent Application Sho-61-239862, JP-A-10-4935 and JP-A-6-141805), (3) Incorporation of an emulsifying agent (JP-A-8-276074), (4) a method for improvement using enzyme preparations (proteases and the like) (JP-A-5-276899 and JP-A-5-284944), and (5) a combination of these methods have been known in which the effects are found by utilizing the respective characteristics.

Nevertheless, the satisfactory yield and the satisfactory overall effect of improving the feel in the mount and the taste have not yet actually been obtained. The method using the alkaline preparations (1) is effective for the yield, but there is a problem that calcium within the body is eluted byphosphates. Further, the feel in the mouth becomes a ham-like bad feel with lack of a fibrous feel. Further, with the lapse of time, a hard feel in the mouth is given, and strange tastes (mainly bitterness and sourness) occur to deteriorate qualities . The method using glutathione preparations alone (2) improves the yield, but the meat is hard, and yeast smell is provided. Thus, it lacks an overall effect, and deterioration during storage is provided. The mixed preparation with the protease mainly serves to soften meat with the protease, and it is not effective for the yield, and causes deterioration of the feel in the mouth and the taste during storage. The method (3) involves problems that it is difficult to secure a stability of enzyme preparations, the amount added thereof is in the narrow range, and qualities are unstable. Further, with the lapse of time, meat becomes hard and decreases qualities. Since the emulsifying agent in the method (4) is coated on a surface of meat, the surface becomes less soft in the cooking. Regarding the method (5), there is, for example, a meat improving agent containing an alkali metal chloride and an alkali metal carbonate and/or an alkali metal bicarbonate (JP-A-10-370923). With respect to the effects provided by adding the same, it has been identified that a feel in the month and a taste are deteriorated over the course of time, a juicy feel and a soft feel of meat are decreased and a function (balance of a feel in the mouth and a taste of meat) in a final product is impaired. Although there are a large number of prior techniques and appropriate effects are given in comparison to untreated products, materials effective for improving the yield, the feel in the mouth and the taste or a method for effective improvement has been further required.

The present inventors made various studies to solve these problems, and previously found that a meat improving agent good in yield and taste and free of a phosphate can be attained using a roast salt containing magnesium, and applied for patent as Japanese Patent Application No. 2002-111173. The invention has further improved this.

## Disclosure of the Invention

(Problems that the Invention is to Solve)

The invention aims to develop a meat improving agent without using a phosphate that involves a problem of elution of calcium, and to provide a processed meat food in which when the meat improving agent is added to animal and fish meats, the decrease in juicy feel and soft feel in the mouth, the deterioration of taste and especially the decrease in yield do not occur during the heating step and especially the good yield, the good feel in the mouth and the good taste are provided even in storage at room temperature or under chilling or freezing for 24 hours after heat-cooking. The taste here referred to does not indicate a taste given by using other seasonings but a good taste as an overall evaluation of a taste, a flavor and a feel inherent in meat, provided by the treatment with the improving agent per se according to the invention.

(Means for Solving the Problems)

The present inventors have assiduously conducted investigations to attain the foregoing aim, and have consequently found that the use of a roast salt and glutathione-containing yeast extract improves the yield by from 10 to 15% and provides the marked effect of improvement and that this effect is attributed to magnesium contained in the roast salt and glutathione contained in the yeast extract. It has been moreover found that a meat improving agent based on this roast salt and further containing a sugar alcohol, an esterified or etherified starch and arginine in appropriate amounts is subjected to pretreatment such as dipping, tumbling or injection for an appropriate period of time either singly or by being dissolved or dispersed in a solution of other seasonings and then to a heating step such as steaming, roasting or frying or to the heating step after storage by freezing or the like, whereby such surprising effects are brought forth that the improvement in yield of the processed meat product can be identified and the feel in the mouth and the taste can be improved more effectively than by ordinary methods, especially a ham-like bad feel in the mouth and bitterness and sourness found in using alkaline materials do not occur, the working efficiency can be increased, and so forth. These findings have led to the completion of the invention.

That is, the first invention is a meat improving agent characterized by comprising, per part by weight of a roast salt containing from 0.02 to 0.7 part by weight of magnesium based on sodium chloride, from 0.001 to 0.1 part by weight of glutathione, from 2.5 to 5.5 parts by weight of a sugar alcohol, and from 1. 0 to 2.5 parts by weight of a starch derivative obtained by esterifying or/and etherifying starch,

the second invention is the meat improving agent as claimed in claim 1, characterized in that the glutathione is derived from a glutathione-containing yeast extract,

the third invention is the meat improving agent as claimed in claim 1 or 2, characterized by further comprising from 0.2 to 1.5 parts by weight of arginine,

the fourth invention is the meat improving agent as claimed in claims 1 or 2, characterized by further comprising from 0.3 to 1.3 parts by weight of an organic acid salt,

the fifth invention is a method for making a processed meat food with an improved quality, characterized by comprising adding the meat improving agent as claimed in claims 1 to 3 to meat such that an amount of glutathione is from 0.002 to 0.15% by weight either directly or in the form of a solution, and conducting at least one treatment selected from dipping, tumbling and injection, and

the sixth invention is the method for making a processed meat food as claimed in claim 4, characterized in that the meat improving agent as claimed in claims 1 to 3 is added along with other seasonings.

## Best Mode for Carrying Out the Invention

The invention is described in more detail below by referring to preferred embodiments. The meat referred to in the invention indicates edible meat including animal meats of cow, pig, chicken and the like and fish meats of freshwater and saltwater fishes and shellfishes which are commonly eaten. The processed meat food referred to in the invention indicates a food pretreated with the meat improving agent according to the invention and directly stored and heat-cooked in eating or a food heat-cooked after pretreatment and then distributed at room temperature or under refrigeration or freezing.

With respect to the roast salt in the invention, any roast salt will do so long as it contains magnesium in an amount of from 0.025 to 0.7 part by weight, preferably from 0.05 to 0.5 part by weight based on sodium chloride and is used as a table salt. In view of the improvement in taste and the improvement in properties of the meat improving agent itself, a roast salt is obtained by roasting at from 300 to 600°C, preferably from 400 to 550°C . The roast salt may be formed by roasting a mixture of sodium chloride and magnesium chloride or by roasting magnesium resulting from concentration of mineral ingredients of seawater along with sodium chloride. A roast salt in which the amount of magnesium based on sodium chloride is within the foregoing range is included in the invention. When the amount of magnesium based on sodium chloride is less than 0.025 part by weight, no effect is provided. When it is more than 0.7 part by weight, bitterness occurs undesirably.

The content of the roast salt in the meat improving agent according to the invention is from approximately 10 to 20 % by weight unless an excipient or the like is added. It may be added as such, or it can be adjusted to a concentration of an easily usable salt by an excipient or other seasonings as required. In general, the concentration of the salt is adjusted to from 5 to 15 % by weight for easy working. The reason is that when the salt is added to raw meat in an amount of from 0.5 to 10 % by weight, a salt concentration to the meat is from 0.025 to 1.5 % by weight and the improving agent can be used most easily. The salt concentration to the meat in the meat improving agent of the invention is from 0.025 to 1.5 % by weight, preferably from 0.2 to 1.0% by weight. When it is less than 0.025% by weight, no effect is provided. When it exceeds 1.5% by weight, the taste of processed animal and fishery products is decreased undesirably for its salty taste.

As glutathione in the invention, reducing glutathione itself or a glutathione preparation can be used. When it is obtained from natural products, a glutathione-containing yeast extract is preferable. The glutathione-containing yeast extract is defined to be a yeast extract containing 1% by weight or more of glutathione which has been identified to be widely present in foods and natural products. When glutathione is supplied from this yeast extract, 1% by weight or more of glutathione in the yeast extract can exhibit the effect without occurrence of yeast smell. The upper limit of the content of glutathione in the yeast extract is not particularly defined. However, the yeast extract having the glutathione content of approximately 20% by weight has been already known, and yeast extracts having a high glutathione content of from approximately 5 to 10% by weight are commercially available. It can properly be selected from among these extracts. Of course, a yeast extract produced by culturing yeast such that the glutathione concentration becomes high according to a known method is also available. With the higher glutathione content, the addition amount of the glutathione-containing yeast extract can be decreased to reduce occurrence of the yeast smell.

The amount of glutathione contained in the meat improving agent of the invention is from 0.001 to 0.1 part by weight, preferably from 0.01 to 0.05 part by weight per part by weight of roast salt. When it is less than 0.001 part by weight, the required effect is not exhibited. When it exceeds 0.05 part by weight, it is effective for the yield, but a strange color or an undesirous taste is given to a processed meat product disadvantageously. When the glutathione-containing yeast extract is used, it is advisable to add the extract in this range as glutathione. The amount of glutathione added to meat is from 0.002 to 0.15% by weight, preferably from 0.005 to 0.1% by weight.

The sugar alcohol referred to in the invention is a reducing maltose powder and reducing starch saccharified materials obtained by hydrogenating starch saccharified materials made mainly of maltose syrup and oligosaccharides. The ratio of the reducing maltose powder and the reducing starch saccharified materials can be from 20 to 80% by weight. The addition amount of the sugar alcohol can be from 2.5 to 5.5 parts by weight per part by weight of the roast salt, and it is from 0.2 to 8.0% by weight, preferably from 0.6 to 6.0% by weight based on the raw material (animal and fishery products) . When the addition amount is less than 0.2% by weight based on the raw material, the effect provided by the addition in the invention is not obtained. When it exceeds 8.0% by weight, a strange sweet taste is imparted to animal and fishery products disadvantageously.

The processed starch referred to in the invention is starch which is made mainly of potato starch, tapioca starch or corn starch and is obtained by etherification or esterification. The addition amount of the processed starch can be from 1.0 to 2.5 parts by weight, preferably from 1.2 to 2.0 parts by weight based on the roast salt, and it is preferably from 0.05 to 3.5% by weight based on the raw material (animal and fishery products) . When the addition amount is less than 0.05% by weight, the effect provided by the addition in the invention is not obtained. When it exceeds 1.5% by weight, a strange feel in the mouth (dry and rough feel as given by starch) is imparted to animal and fishery products themselves disadvantageously.

It is preferable that arginine is further added to the meat improving agent of the invention. The addition amount of arginine is preferably from 0.2 to 1.5 parts by weight, more preferably from 0.3 to 1.0 part by weight per part by weight of the roast salt. When the addition amount is less than 0.2 part by weight, the effect provided by the addition in the invention is not obtained. When it exceeds 1.5 parts by weight, strange deep taste, sweet taste and bitter taste are imparted to processed meat products themselves disadvantageously. As other seasonings, good-body seasonings, and seasonings used to provide desired taste and flavor, such as soy source, sauce and spices, can properly be used according to purposes.

It is preferable to further add an organic acid salt to the meat improving agent of the invention. The organic acid salt referred to in the invention can properly be selected from food additives usable as seasonings and acid seasonings. For example, at least one of salts of citric acid, tartaric acid, fumaric acid, acetic acid and the like is selected. Of these, the organic acid salt made mainly of a citric acid salt is most appropriate. The addition amount of the organic acid salt is from 0.3 to 1.3 parts by weight, preferably from 0.5 to 1.0 part by weight per part by weight of the roast salt. When the addition amount is less than 0.3 part by weight, the effect given by the addition of the organic acid salt is not provided. When the addition amount exceeds 1.3 parts by weight, a strange acid taste is undesirably imparted to a processed meat product itself.

The meat improving agent according to the invention is incorporated on the basis of the roast salt in consideration of the actual easy working. The salt concentration in the improving agent can properly be determined within the foregoing range according to the taste of the desired processed meat food and the working manner. The improving agent prepared in the foregoing range can exhibit the effect of the invention. It can freely be added as an excipient or a seasoning unless the effect of the invention is impaired.

The form of the meat improving agent and the method for using the same in the invention are not particularly limited. For example, the meat improving agent is added to, dissolved in or mixed with water, or is added to a seasoning solution in pretreatment. At this time, an amount of water or the seasoning solution can arbitrarily be selected from the economical and efficient standpoint. It is preferably from 0.01 to 1. 5 parts by weight per part by weight of meat. Further, the product of the invention contains the salt. When the seasoning solution contains a salt, considerable care must naturally be taken of the final salt concentration of the desired processed meat product. In the pretreatment, known methods such as dipping, tumbling and injection are employed. The dipping temperature and time vary with the type and the form of the intended meat. The dipping is usually conducted at from 1 to 10°C for from 30 minutes to 24 hours. These conditions can properly be selected by those skilled in the art.

The distribution form of the meat improving agent of animal and fishery products in the invention or the animal and fishery products using the meat improving agent is described below. (1) The meat improving agent is distributed as such. (2) The meat improving agent is added to animal and fish meats as raw materials either singly or in the form of a seasoning solution with other ingredients, and after pretreatment such as dipping, tumbling or injection, the resulting meats are subjected to heat-cooking such as steaming, roasting or frying, and then distributed in this processed state. (3) The meat improving agent is added to animal and fish meats as raw materials either singly or in the form of a seasoning solution with other ingredients, and after pretreatment such as dipping, tumbling or injection, the resulting meats are chilled or frozen, and then distributed. The meat improving agent according to the invention is used in the meat pretreatment, whereby it is possible to effectively suppress the deterioration of the feel in the mouth due to heat-cooking of animal and fishery products and the decrease in quality due to removal of water, to effectively avoid occurrence of bitterness and sourness, to maintain the yield and to impart a feel in the mouth and a taste inherent in animal and fishery products.

Examples

The invention is illustrated more specifically below by referring to Experimental Examples and Examples. By the way, "%" in these Examples is all "% by weight".

(Experimental Example 1) Effect of glutathione in the invention

In 1, 000 g of water, (1) reducing glutathione (reagent) or (2) Torula yeast extract (Kohjin Co., Ltd., containing 3% of glutathione) was dissolved or dispersed in an amount of from 0.01 to 0.2% as glutathione, and 1,000 g of raw shrimps (from 25 to 30 g/shrimp) with shells and heads removed was dipped therein at from 8 to 10°C for 15 hours. Dehydration was then conducted, and the treated products were coated with a batter, and then fried at 170°C for 4 minutes. The resulting fried shrimps were put in a sealed storage container, and stored in a refrigerator for 24 hours. The batter was peeled, and the yield in comparison to the raw shrimps and the taste were organoleptically evaluated. The results are shown in Tables 1-1 and 1-2. As is apparent from Tables 1-1 and 1-2, the effect is exhibited at the glutathione concentration of approximately 0.005% by weight.

Table 1-1 (1) Reducing glutathione

| Concentration | Yield | Sensory evaluation |
|---|---|---|
| 0% | 65.0% | hard and stiff |
| 0.01% | 76.6% | slightly fresh feel |
| 0.03% | 78.0% | fresh feel and shrimp taste |
| 0.05% | 78.5% | fresh feel and shrimp taste |
| 0.1% | 78.2% | Strong aftertaste is provided. |
| 0.2% | 76.6% | Strong aftertaste and yeast smell are provided. |

Table 1-2 (2) Torula yeast extract (containing 3% glutathione)

| Concentration | Glutathione concentration | Yield | Sensory evaluation |
|---|---|---|---|
| 0.15% | 0.0045% | 76.5% | Fresh feel and shrimp taste are provided. |
| 0.55% | 0.0167% | 77.0% | -ditto- |
| 1.10% | 0.033% | 78.5% | -ditto- |
| 1.60% | 0.048% | 80.5% | -ditto- Slight yeast smell is provided. |
| 2.20% | 0.066% | 81.0% | -ditto- Yeast smell is provided. |
| 3.40% | 0.102% | 81.2% | -ditto- -ditto- |
| 5.40% | 0.162% | 78.4% | -ditto- -ditto- There is a brown color. |

Yield = Weight of shrimp (except a batter) after flying/weight of boiled shrimp before pretreatment x 100

(This applies to the following.)

(Experimental Example 2) Effect of a combination of a roast salt and glutathione in the invention

In 1,000 g of water, 30 g of (A) sodium chloride, (B) a mixture containing 98.5 g of sodium chloride and 1.5 g of magnesium chloride 6-hydrate (0.18% as Mg), (C) (B) burned in an electric oven at 450°C for 2 hours (0.21% as Mg), (D) "Seto no Honjio Yakijio" (0.18% as Mg) made by Ajinomoto Co., Inc. as a commercial roast salt, (E) (A) and a high glutathione yeast extract (Torula yeast extract Kohjin Co., Ltd.,, containing 3% of glutathione) in equal amounts (0.03% as glutathione), or (F) (D) and a high glutathione yeast extract in equal amounts was dissolved or dispersed, and 1,000 g of raw shrimps (from 25 to 30 g/shrimp) with shells and heads removed was dipped therein at from 8 to 10°C for 15 hours. Thereafter, dehydration was conducted, and the treated products were coated with a batter, and then fried at 170°C for 4 minutes. The resulting fried shrimps were put in a sealed storage container, and stored in a refrigerator for 24 hours. The batter was peeled, and the yield in comparison to the raw shrimps and the taste were organoleptically evaluated. The results are shown in Table 2.

As a control, 3 g of (G) sodium bicarbonate or (H) a mixture of sodium tripolyphosphate and sodium pyrophosphate at 1:1 (weight ratio) (hereinafter abbreviated as a polyphosphate) as a polyphosphate, which is ordinarily used, was dissolved in 1, 000 g of water such that the amount became 0.3% as an ordinary amount added to meat, and the same treatment was conducted. Dehydration was conducted, and the treated products were coated with a batter, and then fried at 170°C for 4 minutes. The resulting fried shrimps were put in a sealed storage container, and stored in a refrigerator for 24 hours. These were warmed in an electronic oven (500 W, 30 seconds), and then subjected to comparative evaluation on a soft feel, a juicy feel and a taste by sensory examination. The evaluation was performed by 5 persons in charge of development in comparison to the product in the absence of the additive (water only) . A product which was slightly good or slightly effective was defined as 1, a product which was good or effective as 2, a product which was very good or clearly effective as 3, and a product which was clearly bad as -1.

The results are shown in Table 2.

Table 2

| Additive | Yield | Soft feel | Juicy feel | Taste | Comment |
|---|---|---|---|---|---|
| no | 65% | - | - | - | |
| (A) | 68% | 0.8 | 0.8 | 0.8 | |
| (B) | 72% | 1.6 | 1.6 | 1.8 | Taste is good |
| (C) | 76% | 1.8 | 2.0 | 2.8 | Taste is especially good. |
| (D) | 76% | 1.8 | 2.0 | 2.8 | Taste is especially good. |

Table continued

| Additive | Yield | Soft feel | Juicy feel | Taste | Comment |
|----------|-------|-----------|------------|-------|---------|
| (E) | 76% | 1.5 | 1.6 | 2.0 | Feel and taste are good. |
| (F) | 82% | 2.5 | 2.8 | 2.8 | Feel and taste are especially good. |
| (G) | 78% | 1.6 | 2.8 | -1.0 | Bitterness and sourness occur. |
| (H) | 80% | 1.6 | 2.8 | -1.0 | Bitterness and sourness occur. |

As is apparent from Table 2, the combination (F) of the roast salt and the glutathione-containing yeast extract kept the moisture, gave the juicy feel and the soft feel, and provided the good taste. Especially, the effect for the yield could be exhibited.

Example 1 Example of the meat improving agent according to the invention

Meat improving agents (hereinafter abbreviated as improving agents) A to D shown in Table 3 were prepared using "Seto no Honjio Yakijio" (containing 0.18% of magnesium) made by Ajinomoto Co. , Ltd. as a roast salt, (Torula yeast extract, containing 3% of glutathione) made by Kohjin Co., Ltd., as a highglutathioneyeast extract, "AmaltyMR" made by Towa Chemical Industory Co. , Ltd. as a sugar alcohol and "Emulstar 30A" made by Matsutani Chemical Industry Co. , Ltd. as an esterified starch derivative. At the same time, control products F, G, H and I were prepared in which a glutathione yeast extract, sugar alcohol, starch derivative and roast salt were removed respectively from the control product E and the improving agent D containing 5% of citric acid as organic acid and dextrin was supplemented instead. Incidentally, for facilitating the work and the comparative evaluation, the concentration of the roast salt was set at 10%.

Table 3

| | Improving agent | | | | | Control product | | | |
|---|---|---|---|---|---|---|---|---|---|
| | A | B | C | D | E | F | G | H | I |
| Roast salt | 10 | 10 | 10 | 10 | 10 | 10 | 10 | 10 | 0 |
| Glutathione yeast extract | 2 | 5 | 10 | 15 | 0 | 0 | 10 | 10 | 10 |
| Sugar alcohol | 10 | 20 | 30 | 40 | 40 | 40 | 0 | 40 | 40 |
| Starch derivative | 5 | 10 | 20 | 23 | 20 | 10 | 10 | 0 | 10 |
| Dextrin | 68 | 50 | 25 | 7 | 25 | 40 | 70 | 40 | 40 |
| Trisodium citrate | 5 | 5 | 5 | 5 | 5 | 0 | 0 | 0 | 0 |

Example 2 Evaluation using boiled shrimps

Boiled shrimps were subjected to dipping treatment using the improving agents A to D and the control products E to I prepared in Example 1 and were cooked in the same manner as in Experimental Example 1, and the cooked shrimps were then frozen for 24 hours. The sensory evaluation was performed by 10 panelists. Consequently, the improving agents A to D all gave a soft feel, a juicy feel and an excellent taste. The control product E was inferior to the improving agents A to D in yield, the control product F in taste, the control product G in soft feel, the control product H in juicy feel and the control product I in soft feel and juicy feel. Thus, it was found that the three components, the glutathione-containing yeast extract, the sugar alcohol and the starch derivative are indispensable in the roast salt in the invention. However, the improving agent C and the control product E (Japanese Patent Application No. 2002-111173) were clearly better in yield, feel and taste than the untreated product (dipped in water) and the products treated with sodium bicarbonate and the polyphosphate. The yields in the treatment with the improving agent C and the control product E, the absence of the improving agent and the treatments with sodium bicarbonate and the polyphosphate and the results of the sensory evaluation were shown in Table 3. The improving agent provides the good yield and is markedly improved in taste. The comparative evaluation was performed on condition that the result in the absence of the improving agent was defined as 0. The evaluation standard is as follows. 3: very good, 2: good, 1: slightly good, -1: slightly bad, -2: bad, and -3: very bad

Table 4

| Improving agent | Yield | Feel | Taste | Overall evaluation |
|---|---|---|---|---|
| No addition | 65% | 0 | 0 | 0 |
| Sodium bicarbonate | 82% | 1.3 | -0.5 | 0.7 |
| Polyphosphate | 85% | 1.8 | -0.2 | 1.1 |
| Improving agent C | 90% | 3.0 | 2.8 | 2.9 |
| Control product E | 86% | 2.1 | 2.6 | 2.8 |

Example 3 Evaluation using fried chickens

For 1, 000 g of chicken dark meat cut to pieces each having a weight of from 25 to 30 g, 160 g of a seasoning solution (40 g of soy source, 5 g of sugar, 5 g of sodium glutamate (MSG), 10 g of sake, 15 g of a ginger paste, 5 g of garlic paste and 80 g of water) was prepared, and 20 g of the improving agent C or the control product E shown in Example 1 was dissolved therein. Three seasoning solutions having the same composition were prepared. 20 g of water (absence of the improving agent), 3 g of sodium bicarbonate and 3 g of sodium polyphosphate were dissolved in these three seasoning solutions respectively. The cut pieces of chicken dark meat were dipped in these seasoning solutions to conduct pretreatment at from 8 to 10°C for 1 hour. Then, these products were coated with a flour batter, and fried at 170°C for 4 minutes. The resulting fried chickens were stored in a sealed container under chilling at from 5 to 10°C for 24 hours. These were warmed in an electronic oven when eaten. The yield was measured, and the sensory evaluation was performed by 10 panelists upon using the additive-free product as a control. The evaluation standard is the same as in Example 2. The results were shown in Table 5.

Table 5

| Additive | Yield | Soft feel | Juicy feel | Fibrou s feel | Taste | Overall evaluation |
|---|---|---|---|---|---|---|
| No addition | 67% | 0 | 0 | 0 | 0 | 0 |
| Improving agent C | 86% | 2.6 | 2.8 | 2.8 | 2.6 | 2.6 |
| Improving agent C + 5 wt.% arginine | 87% | 2.8 | 2.8 | 2.8 | 2.8 | 2.7 |
| Control product E | 81% | 2.0 | 2.6 | 2.8 | 2.3 | 2.3 |
| Sodium bicarbonate | 83% | 1.5 | 1.0 | -1.7 | -1.5 | 0.5 |
| Polyphosphate | 84% | 1.8 | 1.4 | -2.3 | -2.0 | 1.0 |

Example 4 Evaluation using fried chickens

For 1, 000 g of chicken dark meat cut to pieces each having a weight of from 25 to 30 g, 160 g of a seasoning solution (40 g of soy source, 5 g of sugar, 5 g of sodium glutamate (MSG), 10 g of sake, 15 g of a ginger paste, 5 g of a garlic paste and 80 g of water) was prepared, and 20 g of the improving agent C or the control product E shown in Example 1 was dissolved therein. At the same time, 20 g of the improving agent C containing 5% by weight of arginine was prepared. Three seasoning solutions having the same composition were prepared. 20 g of water (absence of the improving agent), 3 g of sodium bicarbonate and 3 g of sodium polyphosphate were dissolved in these three seasoning solutions respectively. The cut pieces of chicken dark meat were dipped in these seasoning solutions to conduct pretreatment at from 8 to 10°C for 1 hour. Then, these products were coated with a flour batter, and fried at 170°C for 4 minutes. The resulting fried chickens were stored in a sealed container under chilling at from 5 to 10°C for 24 hours. These were warmed in an electronic oven when eaten. The yield was measured, and the sensory evaluation was performed by 10 panelists upon using the additive-free product as a control. The evaluation standard is the same as in Example 2. The results were shown in Table 5.

As shown in Table 5, the fried chicken obtained by using the improving agent according to the invention did not cause the decrease in fibrous feel of meat as found in the alkaline preparation and provided the high evaluation of the taste even after storage for 24 hours. Further, the yield of the product was also equal to those given by using the alkaline preparation and the polyphosphate, which showed that without using the alkaline preparation and the polyphosphate, the same effect as provided by these was exhibited.

Example 5 Comparison in pretreatment step

An improving agent B1 was prepared as in Example 1 except that the starch derivative of the improving agent B was replaced with an etherified material, Food Tex made by Matsutani Chemical Industry Co. , Ltd. and 10% of dextrin was replaced with sodium glutamate (MSG) , and an effect of pretreatment such as dipping, tumbling or injection was comparatively measured. The experiment was conducted as in Example 4 except for the pretreatment. The dipping was conducted at from 8 to 10°C for 1 hour. The tumblingwas conducted with a tumbler (3-continuous massage wagon) for 1 hour. The injection was conducted with an injector (Super Mini Injector) using a seasoning solution containing the improving agent in an amount of from 10 to 30 ml per 100 g of chicken dark meat. By the way, as a comparative sample, the improving agent of Japanese Patent Application No. 2002-111173 was also listed as a control product (E). The yield after the pretreatment was measured, and the results were shown in Table 6.

Table 6

| Improving agent | Yield | | |
|---|---|---|---|
| | dipping | tumbling | injection |
| No addition | 65% | 120% | 110% |
| Improving agent B1 | 98% | 137% | 130% |
| Control product E | 96% | 135% | 127% |
| Sodium bicarbonate | 93% | 125% | 120% |
| Polyphosphate | 95% | 130% | 125% |

As shown in Table 6, the improving agent of the invention functioned effectively in any pretreatment, and the effect that was the same as or higher than the effect provided by the ordinary improving agents was exhibited. Three pieces pretreated with the improving agent B1 were directly frozen, and after 48 hours, fried at 170°C for 4 minutes. The resulting fried chickens showed a soft feel, a juicy feel and a fibrous feel which were almost the same as those of fried chickens obtained by frying immediately after the pretreatment, providing a good taste.

Example 6 Evaluation using sea eels

An improving agent C1 was prepared as in Example 2 except that in the improving agent C the sugar alcohol was replaced with a mixture of Amalty made by Towa Kasei K.K. and powder P. O. made by Towa Kasei K.K. (weight ratio of 1:1), the starch derivative was replaced with a mixture of Emulstar 30A made by Matsutani Chemical Industry Co. , Ltd. and Alstar H made by Nippon Shokuhin Kako K. K. (weight ratio of 1:1) and 25% of dextrin was replaced with sodium glutamate (MSG). The effect was measured in sea eels which were treated by a dipping method using the same seasoning solution as in Example 3. By the way, the improving agent C was used in an amount of 20 g per 1, 000 g of sea eels as raw materials. The same comparative sample as in Example 5 was used. The thus-treated sea eels were steamed at 95°C for 30 minutes. The resulting steamed sea eels were frozen for 24 hours, then thawed and heated in an electronic oven, and subjected to the sensory evaluation by 10 panelists. The evaluation standard is the same as in Example 3. The results were shown in Table 7.

Table 7

| Additive | Yield | Soft feel | Juicy feel | Taste | Overall evaluation |
|---|---|---|---|---|---|
| No addition | 67% | 0 | 0 | 0 | 0 |
| Improving agent C1 | 75% | 2.5 | 2.5 | 2.8 | 2.6 |
| Control product E | 70% | 2.0 | 2.0 | 2.5 | 2.3 |
| Sodium bicarbonate | 72% | 1.5 | 1.5 | 0.5 | 1.0 |
| Polyphosphate | 74% | 1.7 | 1.8 | 1.0 | 1.3 |

As shown in Table 7, the sea eels treated by using the improving agent of the invention did not cause the deterioration of meat as found in the alkaline preparation, and provided the high evaluation of the soft feel, the juicy feel and the taste even after storage for 24 hours. Further, the yield of the products was also equal to those given by using the alkaline preparation and the polyphosphate, which showed that without using the alkaline preparation and the polyphosphate, the same effect as provided by these was exhibited.

**Advantage of the Invention**

Meat is pretreated using the meat improving agent according to the invention, and heat-cooked to obtain a heat-processed meat food which has a soft feel, a juicy feel and a fibrous feel while maintaining a yield and which less deteriorates a taste even after storage at room temperature or under chilling or freezing for 24 hours.

**Claims**

1. A meat improving agent **characterized by** comprising, per part by weight of a roast salt containing from 0.02 to 0.7 part by weight of magnesium based on sodium chloride, from 0.001 to 0.1 part by weight of glutathione, from 2.5 to 5.5 parts by weight of a sugar alcohol, and from 1.0 to 2.5 parts by weight of a starch derivative obtained by esterifying or/and etherifying starch.

2. The meat improving agent as claimed in claim 1, **characterized in that** glutathione is derived from glutathione-containing yeast extract.

3. The meat improving agent as claimed in claim 1 or 2, **characterized by** further comprising from 0.2 to 1.5 parts by weight of arginine.

4. The meat improving agent as claimed in claim 1 or 2, **characterized by** further comprising from 0.3 to 1.3 parts by weight of an organic acid salt.

5. A method for making a processed meat food with an improved quality, **characterized by** comprising adding the meat improving agent as claimed in claim 1 to 3 to meat such that the amount of glutathione is from 0.002 to 0.15% by weight either directly or in the form of a solution, and conducting at least one treatment selected from dipping, tumbling and injection.

6. The method for making a processed meat food as claimed in claim 5, **characterized in that** the meat improving agent as claimed in claims 1 to 3 is added along with other seasonings.

| INTERNATIONAL SEARCH REPORT | International application No. |
| --- | --- |
| | PCT/JP2004/014579 |

A. CLASSIFICATION OF SUBJECT MATTER
    Int.Cl⁷ A23L1/31, 1/325

According to International Patent Classification (IPC) or to both national classification and IPC

B. FIELDS SEARCHED

Minimum documentation searched (classification system followed by classification symbols)
    Int.Cl⁷ A23L1/31, 1/325

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| P,Y | JP 2003-304836 A (Ajinomoto Co., Inc.), 28 October, 2003 (28.10.03), Full text & CN 1451308 A | 1-7 |
| A | JP 2002-17301 A (House Foods Industrial Co., Ltd.), 22 January, 2002 (22.01.02), Full text (Family: none) | 1-7 |
| A | JP 2003-9821 A (Miyoshi Oil & Fat Co., Ltd.), 14 January, 2003 (14.01.03), Full text (Family: none) | 1-7 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 December, 2004 (03.12.04) | 28 December, 2004 (28.12.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/014579 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 9-84555 A  (Honen Corp.),<br>31 March, 1997 (31.03.97),<br>Full text<br>(Family: none) | 1-7 |
| A | JP 58-43761 A  (Takeda Chemical Industries,<br>Ltd.),<br>14 March, 1983 (14.03.83),<br>(Family: none) | 1-7 |
| A | JP 6-311841 A  (Ajinomoto Co., Inc.),<br>08 November, 1994 (08.11.94),<br>(Family: none) | 1-7 |

Form PCT/ISA/210 (continuation of second sheet) (January 2004)